# FASCICULE DE BREVET EUROPEEN

(11) **EP 3 642 641 B1**
(45) Date de publication et mention de la délivrance du brevet: **21.07.2021**
(21) Numéro de dépôt: 18731865.4
(22) Date de dépôt: 22.06.2018
(51) Int. Cl.: G01S 5/00, G01S 5/14, G01S 5/02

(54) **GEOLOCALISATION SANS GPS PAR UN TRACEUR MIXTE WIFI ET LPWAN**
GEOLOKALISIERUNG OHNE GPS MIT EINEN GEMISCHTEM WIFI- UND LPWAN-PLOTTER
GEOLOCATION WITHOUT GPS BY A MIXED WIFI AND LPWAN PLOTTER

(30) Priorité: 22.06.2017 FR 1755724
(43) Date de publication de la demande: 29.04.2020
(73) Titulaire: Connected Cycle, 75016 Paris (FR)
(72) Inventeur: KRAVANJA, Christian, 75015 Paris (FR); DEBBASCH, Jean-Marie, 75015 Paris (FR)
(74) Mandataire: Regimbeau
(86) Numéro de dépôt international: PCT/EP2018/066829
(87) Numéro de publication internationale: WO 2018/234570

(56) Documents cités:
- WO-A1-2016/174396
- FR-A1- 3 041 497
- US-A1- 2014 111 380
- US-B1- 9 652 955

## Description

La présente invention est relative à la géolocalisation de biens ou de personnes.

### DOMAINE TECHNIQUE GÉNÉRAL ET ART ANTÉRIEUR

Les traceurs permettant de géo-localiser avec précision des biens ou des personnes sont généralement composés de deux parties fonctionnelles :
- un module « GPS » qui permet au dispositif de calculer sa position (exprimée en coordonnées de latitude et de longitude - coordonnées GPS) ;
- un module de communication (modem « WAN ») qui permet au traceur de transmettre sa position à travers un réseau sans-fil opéré (GSM, 3G, 4G, ...).
Ils comportent en outre habituellement un troisième élément actif : un microcontrôleur qui gère ces deux modules et le cas échéant d'autres fonctionnalités.

Cette implémentation basée sur l'utilisation d'un module GPS présente plusieurs inconvénients.

En particulier, elle est onéreuse : les modules GPS sont généralement d'un coût conséquent ; en outre, le coût global du traceur est d'autant plus important que celui-ci doit également comporter une antenne GPS associée au module GPS.

Par ailleurs une telle implémentation de traceur est encombrante : ceci du fait de sa structure comprenant un module GPS et une antenne GPS, la taille de cette dernière devant être suffisante pour assurer une bonne réception des signaux satellites.

En outre, l'utilisation d'un module GPS augmente la consommation en énergie du traceur, d'autant qu'au démarrage du module après une veille prolongée (« cold start »), plusieurs minutes de fonctionnement peuvent être nécessaires à obtenir la géolocalisation (« time to fix »), de sorte que les traceurs GPS souffrent souvent d'une faible autonomie.

Egalement encore, une telle implémentation de traceur a l'inconvénient de ne fonctionner qu'en extérieur. L'antenne du GPS doit en effet être dirigée vers le ciel, sans que sa fenêtre de réception ne soit obstruée.

Enfin, l'utilisation de modems WAN conçus pour la téléphonie mobile (2G, 3G, 4G LTE, ...) implique une consommation d'énergie importante.

On connait par ailleurs déjà, notamment pour les systèmes de géolocalisation utilisés sur les téléphones portables, des techniques géolocalisation s'appuyant sur la détection des points d'accès WiFi visibles par un téléphone portable et le cas échéant sur le niveau de puissance que ledit téléphone détecte pour lesdits point d'accès.

Les informations sur les points d'accès visibles par ledit téléphone portable et le cas échéant sur les niveaux de puissance relevés pour ceux-ci sont collectées par une application logicielle dudit téléphone, qui interroge - via une connexion internet établie à partir dudit du téléphone - une base de données à distance pour que celle-ci lui donne en retour des coordonnées de géolocalisation.

Enfin, on connait également déjà de nombreuses autres solutions de géolocalisation basées sur la triangulation des bornes du réseau « WAN » ou « LPWAN » (LPWAN ou « Low Power Wide Area Network » selon la terminologie anglo-saxonne), par exemple la localisation LBS basée sur la triangulation des stations LoRa visibles du terminal. En particulier, la demande de brevet FR 3041497 A1 divulgue un procédé de détermination de la position d'un équipement, comportant une étape de collecte des identifiants et des puissances en réception de points d'accès WIFI, et une étape de transmission desdites données collectées à travers un deuxième réseau de communication de type longue distance et bas-débit (LPWAN).

Ces solutions ne permettent pas de disposer d'une géolocalisation précise, celle-ci étant généralement connue avec un niveau d'incertitude de plusieurs centaines de mètres.

### PRÉSENTATION GÉNÉRALE DE L'INVENTION

Un but général de l'invention est de proposer une solution permettant un suivi de la localisation de biens ou de personnes qui ne présentent pas les inconvénients des techniques antérieures.

L'invention propose quant à elle un procédé de géolocalisation d'un bien ou d'une personne dans lequel un traceur associé audit bien ou à ladite personne met en œuvre les étapes suivantes :
a) détection de réseaux WiFi et de leurs points d'accès se trouvant à sa portée,
b) collecte de données brutes relatives à au moins un réseau WiFi détecté et à au moins un point d'accès par lequel ledit réseau est rendu visible audit traceur,
c) transmission des données brutes collectées, à un serveur de résolution à distance, via une communication par réseau LPWAN établie à partir du traceur,
d) traitement de ces données brutes par le serveur de résolution à distance, afin de fournir une information de localisation,
caractérisé en ce que le procédé de géolocalisation débute par une étape de sortie de veille, et se termine par une étape de retour en veille, et en ce que le

procédé comprend en outre une étape de mémorisation dans une mémoire des données brutes relatives à l'au moins un réseau WiFi détecté, et une étape de comparaison d'une liste des points d'accès Wi-Fi détectés à une liste des points d'accès Wi-Fi mémorisée lors du dernier cycle ayant permis une localisation, le microcontrôleur étant mis en veille jusqu'à un prochain cycle lorsque les deux listes comportent des points d'accès en commun.

Certaines caractéristiques préférées mais non limitatives du procédé sont les suivantes, prises individuellement ou en combinaison.
- Le procédé comprend en outre une étape de reconfiguration de certains paramètres du traceur et/ou d'initiation d'une mise à jour logicielle, suite à la réception d'une réponse d'un serveur 3a.
- Le procédé comprend en outre une étape d'élimination par le traceur de l'un de deux réseaux similaires qui seraient émis par un même point d'accès physique, le traceur se basant sur un sous-ensemble du BSSID des points d'accès Wi-Fi environnants.

Typiquement, le réseau LPWAN est un réseau de technologie LoRaWan.

Il peut également être un réseau de technologie SigFox.

En variante, il peut être un réseau de technologie Zigbee.

En variante encore, le réseau LPWAN peut être un réseau LTE-m.

Il peut en outre être un réseau narrowband-IOT.

Les technologies LPWAN en commun de permettre d'utiliser des modems peu encombrants, de faible coût et de de forte autonomie.

La solution proposée permet donc une structure de capteur particulièrement simple avec un faible encombrement, un faible coût et une consommation énergétique limitée. Le traceur peut en outre n'utiliser une connexion par un réseau LPWAN qu'à titre secondaire et ne transmettre les données brutes de localisation WiFi par le biais d'une telle connexion secondaire que lorsqu'une transmission par des réseaux Wifi (réseaux publics notamment) n'est pas disponible.

A cet effet, le traceur vérifie la possibilité d'une transmission au serveur de résolution à distance par l'intermédiaire d'un réseau WiFi auquel il parvient à se connecter et, à défaut, déclenche une transmission par réseau LPWAN.

En variante, le traceur peut vérifier la possibilité d'une transmission au serveur de résolution à distance via une communication par réseau LPWAN. S'il ne parvient pas à établir une telle communication, le traceur peut alors tenter d'établir une connexion à un réseau WiFi. En cas de succès de la connexion, le traceur déclenche une transmission via le réseau WiFi.

Les données brutes peuvent comprendre un identifiant de point d'accès (BSSID) et/ou un nom de réseau (SSID) et/ou un niveau de puissance du signal reçu (RSSI).

Le traceur peut être muni d'identifiants Wi-Fi qu'il mémorise et qui lui permettent de se connecter à des réseaux Wi-Fi fermés qu'il détecterait dans son environnement.

L'invention propose également un traceur dont le microcontrôleur est apte à mettre en œuvre les étapes a) à c).

Le traceur peut comporter en outre au moins un capteur de mesure de grandeurs physiques externes. Une sortie de veille du traceur peut être déclenchée en fonction des mesures du capteur de mesures de grandeurs physiques externes.

L'invention propose également un système de géolocalisation comportant un serveur de résolution adapté à la mise en œuvre de l'étape d).

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique illustrant l'architecture intervenant dans un exemple de mise en œuvre de l'invention ;
- les figures 2a et 2b illustrent deux modes de réalisation possible pour des traceurs conformes à l'invention ;
- la figure 3 illustre différentes étapes susceptibles d'être mises en œuvre par un traceur conforme à un mode de réalisation l'invention.

### DESCRIPTION D'UN OU PLUSIEURS MODES DE MISE EN ŒUVRE ET DE RÉALISATION

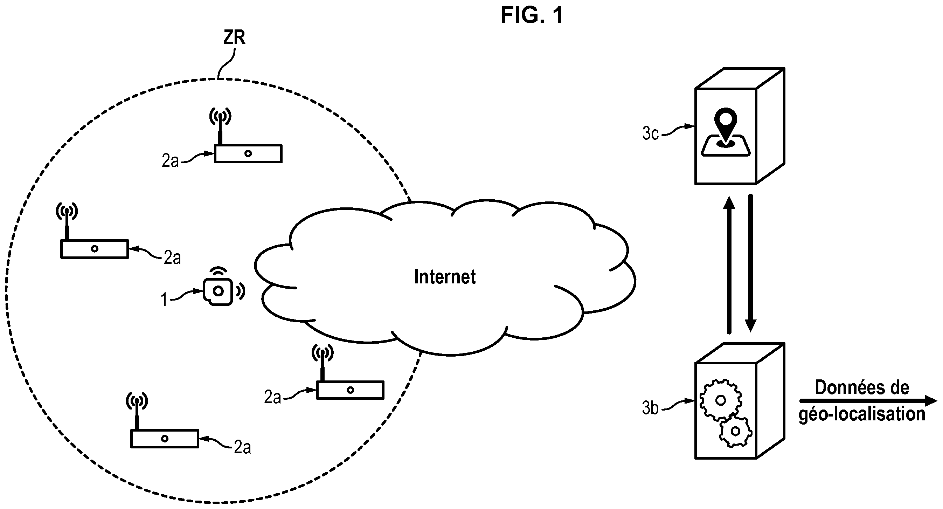

Sur la figure 1, on a illustré un traceur de géolocalisation 1, différents points d'accès Wi-Fi 2a dans la zone de réception ZR dudit traceur 1 (périmètre schématiquement délimité par des traits pointillés) et une pluralité de serveurs 3b et 3c qui interviennent dans la chaine de transmission et de traitement des données (requêtes R) transmises par le traceur 1.

### Structure du traceur

Le traceur 1 comporte pour l'essentiel :
- une unité de traitement
- un émetteur/récepteur WiFi lui permettant d'écouter l'environnement Wi-Fi autour de lui (et le cas échéant également de communiquer en Wi-Fi),
- un modem de communication selon les technologies de réseau sans fil choisies dans le groupe comprenant les technologies.

Notamment, un but de l'invention est de proposer une solution permettant un suivi de la localisation de biens ou de personnes au moyen de traceurs qui soient particulièrement peu encombrants, d'un très faible coût et d'une grande autonomie.

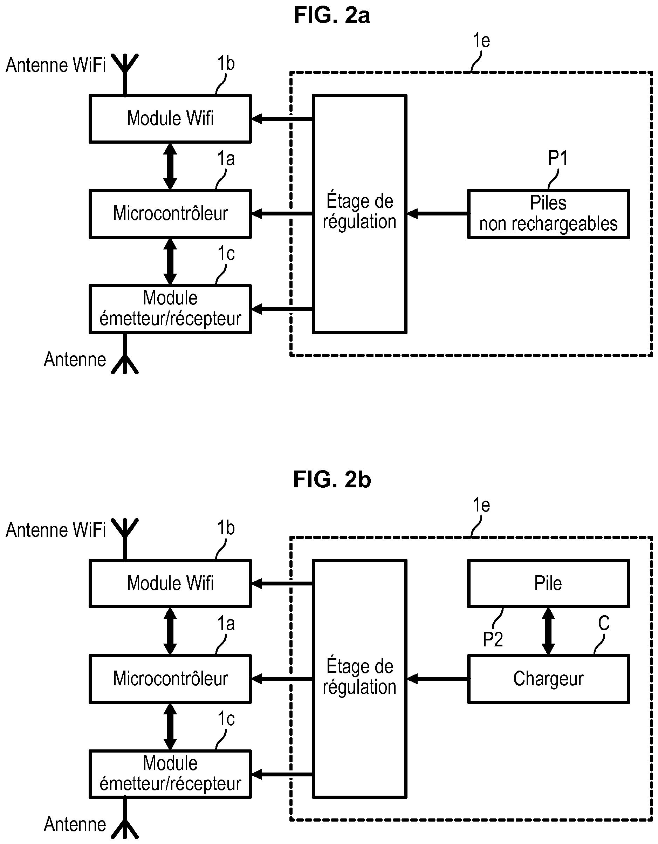

Deux exemples d'architectures particulièrement simples possibles pour le traceur 1 sont illustrés sur les figures 2a et 2b. Dans ces exemples, le traceur 1 comporte un microcontrôleur la, un module Wifi 1b associé à une antenne, et un module émetteur/récepteur 1c associé à une antenne.

L'émetteur/récepteur 1c permet des communications sous technologies LPWAN.

Les technologies LoRa, SigFox, Zigbee, LTE-m ou narrowband-IOTLPWAN ont en particulier été chacune identifiée comme consituant un mode de mise en œuvre possible avantageux.

Le microcontrôleur la et les modules émetteur/récepteur 1b associé à une antenne ainsi qu'une alimentation le.

L'alimentation le peut être assurée par une ou plusieurs piles non rechargeables montées en série (piles P1 sur la figure 2a).

L'alimentation le peut également être rechargeable (pile P2 rechargeable alimentée par un chargeur C dans l'exemple de la figure 2b).

Egalement, un étage de régulation 1d peut être prévu pour protéger le microcontrôleur la et le module émetteur/récepteur 1b. Cet étage est alors interposé entre d'une part les éléments actifs que constituent ledit microcontrôleur la et ledit module 1b et d'autre part le reste du circuit d'alimentation 1c (piles P1 en série dans le cas de la figure 2a ou pile P2 et son chargeur C dans le cas de la figure 2b).

Cet étage de régulation 1d permet d'écrêter la tension appliquée en entrée du microcontrôleur la et du module 1b lorsque la tension d'alimentation est susceptible de dépasser la tension maximale supportée par le microcontrôleur la et le module émetteur/récepteur 1b.

L'électronique du traceur 1 est par exemple montée sur un support souple ou rigide (étiquette, support rigide, etc.) ou dans un boîtier de petites dimensions, ce qui permet de l'intégrer facilement à tout objet dont on souhaiterait pouvoir suivre la localisation (sacs de voyage, vêtements, colliers pour animal, etc.). Egalement, il peut se présenter sous la forme d'un patch adapté pour être collé à la peau d'un individu.

### Points d'accès

Les points d'accès WiFi 2a sont tous ceux qui sont visibles par le traceur de suivi et pour lesquelles le traceur 1 peut récupérer des données brutes relatives à l'environnement WiFi du traceur 1 (données dites « primitives de géolocalisation »)et le cas échéant d'autres données complémentaires.

Ces ponts d'accès sont typiquement des bornes WiFi d'hôtels, de cafés, de lieux publics (gares, aéroports, musées, etc...), bornes WiFi de particuliers, d'entreprises, etc...

### Serveurs

Sur la figure 1, le traceur 1 transmet les données brutes de géolocalisation WiFi à un serveur 3a à distance qui peut traiter les données lui-même ou interroger un serveur 3b de résolution.

La transmission est commandée par le microcontrôleur la.

Celui-ci peut être programmé pour émettre les données via le module 1c lorsque cela est possible.

En variante, il peut transmettre les données à titre principal via le module WiFi 1b et ne déclencher une transmission par le module 1c que lorsque cela la transmission via le module 1b n'est pas possible.

Le serveur 3b est quant à lui un serveur de résolution apte fournir une information de localisation à partir des données brutes sur un environnement WiFi.

Il traite les données brutes reçues du serveur 3a, c'est-à-dire les données collectées par le traceur 1 sur les réseaux Wi-Fi visibles dans son environnement, et retourne audit serveur 3a une information de localisation (coordonnées de latitude ou longitude (système géodésique WGS 84, couramment utilisé, notamment par le système GPS)).

### Données brutes d'environnement - primitives de localisation

Les données brutes d'environnement collectées par le traceur 1 - ou primitives de la localisation - sont issues des points d'accès Wi-Fi 2a les plus visibles dudit traceur 1 (point d'accès pour lesquels ledit traceur 1 reçoit un signal WiFi avec le meilleur niveau de signal).

Ces points d'accès peuvent être sélectionnés par le microcontrôleur la du traceur 1 par comparaison à un seuil, ou encore en sélectionnant les N points d'accès WiFi les plus visibles par ledit traceur (ou N est un entier supérieur ou égal à 1.

De ces points d'accès, tout ou partie des informations suivantes sont collectées :
- Nom du réseau diffusé par le point accès (SSID),
- Identifiant du point d'accès (BSSID),
- Niveau de puissance du signal reçu, en dBm (RSSI).

Par exemple, avec les données de 3 points d'accès, les données brutes collectées par le capteur seront des données alphanumériques reprenant ces trois types d'information pour chacun des trois points.

| | | |
|---|---|---|
| Point_Acces_1_SSID | Point_Acces_1_BSSID | Point_Acces_1_RSSI |
| Point_Acces_2_SSID | Point_Acces_2_BSSID | Point_Acces_2_RSSI |
| Point_Acces_3_SSID | Point_Acces_3_BSSID | Point_Acces_3_RSSI |

Des implémentations avec un nombre différents de points d'accès sont également possibles, la collecte d'informations sur un seul point d'accès permettant en elle-même de fournir une information de localisation. La multiplication des points d'accès et des informations collectées permet une triangulation et ainsi une meilleure précision sur la localisation.

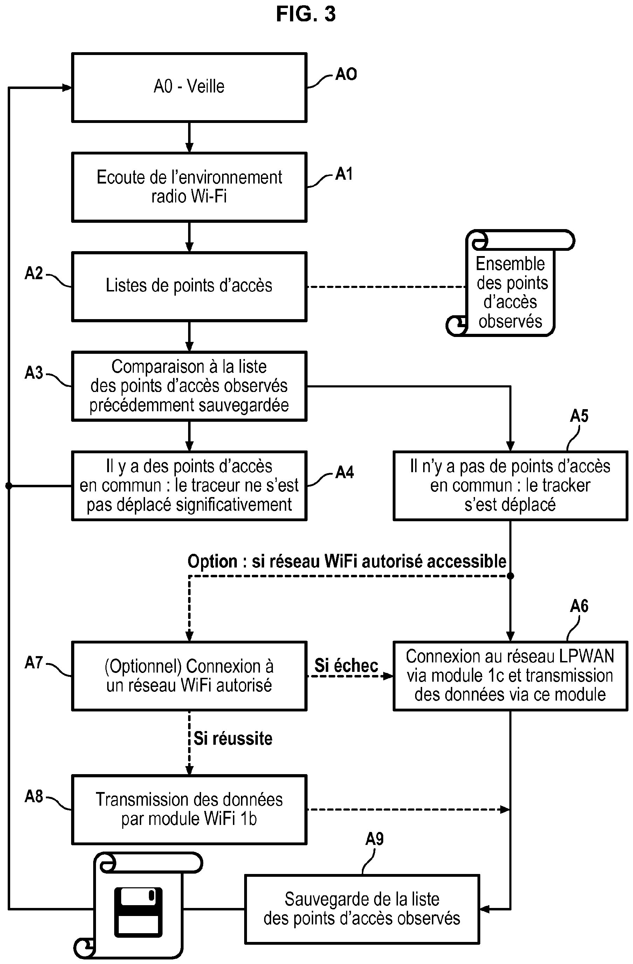

### Fonctionnement interne du traceur de suivi (Figure 3)

Le microcontrôleur 1b alterne entre un état de veille profonde (A0), lui permettant d'économiser l'alimentation du traceur, et un état de réveil dans lequel il effectue une tentative de transmission de données.

Par exemple, sur un cycle d'une heure, il peut être en veille pendant 59' et 55 secondes à un niveau de consommation énergétique très faible, et se réveiller 5 secondes pour effectuer ses tâches.

Une fois réveillé, le microcontrôleur 1b effectue une séquence de tâches du type de celles illustrées sur la figure 3.

Notamment :
- il écoute son environnement WiFi et détecte les points d'accès (étape A1),
- il mémorise (étape A2) la liste de l'ensemble des points d'accès Wi-Fi environnants visibles par le récepteur Wi-Fi.

Les différents points d'accès peuvent être identifiés par leur BSSID (identifiant de station), et le cas échéant par leur SSID (identifiant de réseau), le microcontrôleur la pouvant également mémoriser le niveau (RSSI) du signal qu'il reçoit de ces réseaux.

Le microcontrôleur la compare alors la première liste (celle de l'ensemble des points d'accès observés) à celle du dernier cycle ayant permis une localisation (étape A3).

Lorsqu'il y a des points d'accès en commun, le microcontrôleur la considère que le traceur 1 ne s'est pas déplacé significativement et se remet en veille (étape A4) jusqu'au prochain cycle.

Dans le cas contraire (A5 et A6), le microcontrôleur la se connecte à Internet à travers sa connexion LPWAN (1c). Le microcontrôleur la transmet une requête incluant les données brutes au serveur 3a (étape A6). Ledit serveur 3a transmet le cas échéant lesdites données brutes au serveur de résolution 3b.

D'autres variantes de mise en œuvre sont bien entendu possibles. Notamment, le microcontrôleur la transmet les données à titre principal via le module WiFi 1b (Etapes A7 et A8) et ne déclencher une transmission par le module 1c que lorsque cela la transmission via le module 1b n'est pas possible.

En variante, le microcontrôleur la peut transmettre les données à la fois via le module Wi-Fi 1b et via le module 1c. Le taux de réception des données est alors augmenté.

Lorsqu'un message est transmis, soit via le réseau WiFi, soit via le module 1c, soit via les deux modules, la liste des points d'accès WiFi visibles par le traceur 1 est mémorisée (étape A9).

### Traitement réalisé par le serveur de résolution

Le serveur de résolution 3b reçoit les données brutes primitives sous encodées sous un format JSON de la façon suivante (cas de trois points d'accès) :

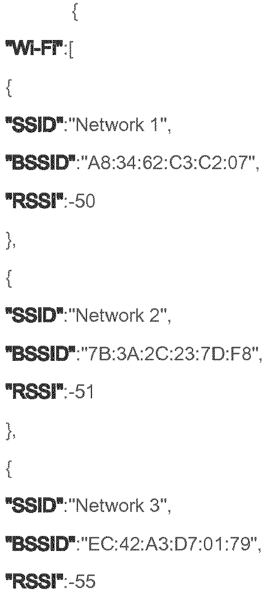

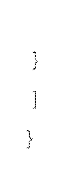

La requête à cette API est effectuée en HTTP ou HTTPS, le serveur 3b retourne alors les informations au serveur 3a dans une réponse HTTPS. D'autres protocoles de transport Internet que HTTP/HTTPS sont utilisables. Lorsque le serveur a pu résoudre avec succès l'environnement Wi-Fi en coordonnées GPS, la réponse contient généralement :
- la latitude estimée,
- la longitude estimée,
- la précision (en mètres),
- l'adresse postale si les coordonnées GPS ont également pu être résolues en adresse postale.

### Divers

### Liste de réseaux Wi-Fi autorisés

Le traceur 1 peut être muni par programmation d'une liste de réseaux Wi-Fi autorisés auxquels il se connectera s'ils sont visibles, afin d'émettre les données préférentiellement à travers la connexion Wi-Fi (1b) au lieu d'utiliser la connexion LPWAN (1c).

A ce titre, le module peut être munis d'identifiants permettant de se connecter à certains réseaux fermés qu'il détecterait dans son environnement.

### Détection de mouvement ou détection de sédentarité :

En cas de succès d'émission de l'information de localisation, le traceur 1 peut enregistrer tout ou partie des réseaux WiFi visibles jusqu'au prochain cycle. Lorsque le nouveau cycle intervient, le traceur 1 récupère à nouveau la liste des réseau environnants, et la compare à la liste précédente pour savoir si le traceur a bougé ou non : si un ou plusieurs réseaux sont identiques entre les deux listes, le traceur n'a pas bougé ou a bougé d'une distance faible ( < 100 m généralement).

Lorsque ledit traceur 1 n'a pas bougé, il peut se remettre immédiatement en veille sans effectuer un cycle d'émission afin d'économiser de l'énergie), compte tenu du fait que sa localisation est déjà connue depuis le cycle précédent.

Il peut également automatiquement allonger la temporisation entre les cycles s'il détecte que le module n'est pas en mouvement.

Il peut aussi forcer son émission, lors d'un réveil, après un certain nombre de cycles sans mouvement.

Dans certains d'usages, on peut aussi souhaiter utiliser le mécanisme à l'inverse : les positions ne sont alors transmises que lorsque le module ne bouge pas.

### Diversité des Point d'accès utilisés pour la localisation

Le traceur 1 se base sur un sous-ensemble du BSSID des points d'accès wifi environnants pour éliminer l'un de deux réseaux similaires qui seraient en fait émis par un même point d'accès physique et nuirait à la diversité recherchée pour les 3 identifiants de point d'accès servant de primitive à la géolocalisation.

### Visibilité d'équipements Bluetooth

Egalement, la primitive de localisation utilisée peut intégrer la visibilité d'équipements Bluetooth identifiés par leur identifiant de dispositifs, uniquement (lorsqu'aucun hotspots WiFi n'est détecté) ou en complément d'identifiants de hotspots WiFi.

### Données d'un capteur externe

Le traceur 1 peut en outre être muni d'un capteur de mesure de grandeurs physiques externes, dont les données sont transmises par la connexion LPWAN ou Wifi.

Un tel capteur peut être un capteur barométrique dont les données sont destinées à être converties par le serveur 3b en données d'altitude, un capteur d'accélération(s), un capteur de température ou encore un capteur de données de pollution (capteur de concentration de particules polluantes). D'autres types de capteurs sont bien entendu possibles.

Les données mesurées par le capteur externe et transmises par la connexion LPWAN ou WiFi peuvent être utilisées pour déclencher une sortie de veille du traceur 1. Par exemple, dans le cas où le traceur 1 est muni d'un capteur de mouvement, une sortie de veille du traceur 1 peut être déclenchée lorsqu'un mouvement est détecté par le capteur de mouvement.

### Re-paramétrage du module :

En variante encore, le traceur 1, après avoir émis un message se met à l'écoute d'une réponse du serveur 3a. Il peut se servir de cette réponse d'une part pour s'assurer que le serveur a bien reçu sa transmission (acquittement) : si sa requête n'est pas acquittée, le module peut tenter de la réémettre.

D'autre part, la réponse peut permettre de recevoir une information lui permettant de reconfigurer certains paramètres (ex : changement de sa fréquence d'émission, etc...). La réponse peut également permettre d'initier une mise à jour logicielle.

### Utilisation des données Wi-Fi pour déterminer l'altitude ou un étage :

En variante encore, les données d'environnement Wi-Fi servent également à déterminer l'étage ou l'altitude approximative du module.

## Revendications

1. Procédé de géolocalisation d'un bien ou d'une personne dans lequel un traceur (1) associé audit bien ou à ladite personne met en œuvre les étapes suivantes :
a) détection de réseaux WiFi et de leurs points d'accès (2a) se trouvant à sa portée,
b) collecte de données brutes relatives à au moins un réseau WiFi détecté et à au moins un point d'accès (2a) par lequel ledit réseau est rendu visible audit traceur (1),
c) transmission des données brutes collectées à un serveur de résolution (3b) à distance, via une communication par réseau LPWAN établie à partir du traceur (1),
d) traitement de ces données brutes par le serveur de résolution (3b) à distance, afin de fournir une information de localisation,
**caractérisé en ce que** le procédé de géolocalisation débute par une étape de sortie de veille, et se termine par une étape de retour en veille, et **en ce que** le procédé de géolocalisation comprend en outre une étape de mémorisation dans une mémoire des données brutes relatives à l'au moins un réseau WiFi détecté, et une étape de comparaison d'une liste des points d'accès (2a) Wi-Fi détectés à une liste des points d'accès (2a) Wi-Fi mémorisée lors du dernier cycle ayant permis une localisation, le microcontrôleur (1a) étant mis en veille jusqu'à un prochain cycle lorsque les deux listes comportent des points d'accès (2a) en commun.

2. Procédé selon la revendication 1, comprenant en outre une étape de reconfiguration de certains paramètres du traceur (1) et/ou d'initiation d'une mise à jour logicielle, suite à la réception d'une réponse d'un serveur (3a).

3. Procédé selon la revendication 1 ou la revendication 2, comprenant en outre une étape d'élimination par le traceur (1) de l'un de deux réseaux similaires qui seraient émis par un même point d'accès (2a) physique, le traceur (1) se basant sur un sous-ensemble du BSSID des points d'accès (2a) Wi-Fi environnants.

4. Procédé selon l'une des revendications 1 à 3, dans lequel le réseau LPWAN est un réseau LoRaWan.

5. Procédé selon l'une des revendications 1 à 3, dans lequel le réseau LPWAN est un réseau SigFox.

6. Procédé selon l'une des revendications 1 à 3, dans lequel le réseau LPWAN est un réseau Zigbee.

7. Procédé selon l'une des revendications 1 à 3, dans lequel le réseau LPWAN est un réseau LTE-m.

8. Procédé selon l'une des revendications 1 à 3, dans lequel le réseau LPWAN est un réseau narrowband-IOT.

9. Procédé selon l'une des revendications 1 à 3, dans lequel le traceur (1) vérifie la possibilité d'une transmission au serveur de résolution (3b) à distance par l'intermédiaire d'un réseau WiFi auquel il parvient à se connecter et dans lequel, à défaut, le traceur (1) déclenche une transmission par réseau LPWAN.

10. Procédé selon l'une des revendications 1 à 3, dans lequel le traceur (1) vérifie la possibilité d'une transmission au serveur de résolution (3b) à distance via une communication par réseau LPWAN et dans lequel, à défaut, le traceur (1) déclenche une transmission par un réseau WiFi auquel il parvient à se connecter.

11. Procédé selon l'une des revendications 1 à 3, dans lequel des données brutes comprennent un identifiant de point d'accès (2a) (BSSID) et/ou un nom de réseau (SSID) et/ou un niveau de puissance du signal reçu (RSSI).

12. Procédé selon l'une des revendications précédentes, dans lequel le traceur (1) est muni d'identifiants Wi-Fi qu'il mémorise et qui lui permettent de se connecter à des réseaux Wi-Fi fermés qu'il détecterait dans son environnement.

13. Traceur (1) de géolocalisation de biens ou de personnes comportant un microcontrôleur (1a), un module émetteur/récepteur WiFi (1b), une alimentation (le), dans lequel le microcontrôleur (1a) est apte à mettre en œuvre les étapes a) à c) d'un procédé selon l'une des revendications 1 à 12, ledit traceur (1) de localisation comportant un module émetteur/récepteur (1c) de technologie LPWAN.

14. Traceur (1) selon la revendication 13, **caractérisé en ce qu'**il comporte en outre au moins un capteur de mesure de grandeurs physiques externes.

15. Traceur (1) selon la revendication 14, dans lequel une sortie de veille du traceur (1) est déclenchée en fonction des mesures du capteur de mesures de grandeurs physiques externes.

16. Système de géolocalisation de biens ou services comportant au moins un traceur (1) selon l'une des revendications 13 à 15 et un serveur de résolution (3b) adapté pour mettre en œuvre l'étape d) d'un procédé selon l'une des revendications 1 à 12.

## Patentansprüche

1. Verfahren zur Geolokalisierung eines Guts oder einer Person, in dem ein Tracer (1), der dem Gut oder der Person zugehörig ist, die folgenden Schritte ausführt:
a) Detektion von Wi-Fi-Netzen und ihrer Zugangspunkte (2a), die sich in seiner Reichweite befinden,
b) Sammeln von Rohdaten, die mindestens ein detektiertes Wi-Fi-Netz und mindestens einen Zugangspunkt (2a) betreffen, durch den das Netz für den Tracer (1) sichtbar gemacht wird,
c) Übertragung der gesammelten Rohdaten an einen entfernten Auflösungsserver (3b) über eine Kommunikation über LPWAN-Netz, die ausgehend von dem Tracer (1) eingerichtet wird,
d) Verarbeitung dieser Rohdaten durch den entfernten Auflösungsserver (3b), um eine Lokalisierungsinformation zu liefern,
**dadurch gekennzeichnet, dass** das Geolokalisierungsverfahren mit einem Schritt zum Verlassen des Stand-by-Zustands beginnt und mit einem Schritt zur Rückkehr in den Stand-by-Zustand endet, und dadurch, dass das Geolokalisierungsverfahren ferner einen Schritt zur Speicherung der Rohdaten, die das mindestens eine detektierte Wi-Fi-Netz betreffen, in einem Speicher und einen Schritt zum Vergleich einer Liste der detektierten Wi-Fi-Zugangspunkte (2a) mit einer Liste der Wi-Fi-Zugangspunkte (2a) umfasst, die beim letzten Zyklus gespeichert wurde, der eine Lokalisierung erlaubt hat, wobei der Mikrocontroller (1a) bis zu einem nächsten Zyklus in den Stand-by-Zustand versetzt wird, wenn die zwei Listen gemeinsame Zugangspunkte (2a) umfassen.

2. Verfahren nach Anspruch 1, das ferner einen Schritt zur Rekonfiguration bestimmter Parameter des Tracers (1) und/oder zur Einleitung eines Software-Updates im Anschluss an den Empfang einer Antwort von einem Server (3a) umfasst.

3. Verfahren nach Anspruch 1 oder Anspruch 2, das ferner einen Schritt zur Beseitigung von einem von zwei ähnlichen Netzen, die gegebenenfalls von einem selben physikalischen Zugangspunkt (2a) ausgegeben werden, durch den Tracer (1) umfasst, wobei der Tracer (1) sich auf eine Untermenge der BSSID der umgebenden Wi-Fi-Zugangspunkte (2a) stützt.

4. Verfahren nach einem der Ansprüche 1 bis 3, wobei das LPWAN-Netz ein LoRaWan-Netz ist.

5. Verfahren nach einem der Ansprüche 1 bis 3, wobei das LPWAN-Netz ein SigFox-Netz ist.

6. Verfahren nach einem der Ansprüche 1 bis 3, wobei das LPWAN-Netz ein Zigbee-Netz ist.

7. Verfahren nach einem der Ansprüche 1 bis 3, wobei das LPWAN-Netz ein LTE-m-Netz ist.

8. Verfahren nach einem der Ansprüche 1 bis 3, wobei das LPWAN-Netz ein Schmalband-IOT-Netz ist.

9. Verfahren nach einem der Ansprüche 1 bis 3, wobei der Tracer (1) die Möglichkeit einer Übertragung über ein Wi-Fi-Netz, mit dem es ihm gelingt, sich zu verbinden, an den entfernten Auflösungsserver (3b) überprüft und anderenfalls der Tracer (1) eine Übertragung über LPWAN-Netz auslöst.

10. Verfahren nach einem der Ansprüche 1 bis 3, wobei der Tracer (1) die Möglichkeit einer Übertragung über das LPWAN-Netz an den entfernten Auflösungsserver (3b) überprüft und anderenfalls der Tracer (1) eine Übertragung über ein Wi-Fi-Netz auslöst, mit dem es ihm gelingt, sich zu verbinden.

11. Verfahren nach einem der Ansprüche 1 bis 3, wobei die Rohdaten eine Zugangspunktkennung (2a) (BSSID) und/oder einen Netznamen (SSID) und/oder einen Leistungspegel des empfangenen Signals (RSSI) umfassen.

12. Verfahren nach einem der vorhergehenden Ansprüche, wobei der Tracer (1) mit Wi-Fi-Kennungen versehen ist, die er speichert und die es ihm ermöglichen, sich mit geschlossenen Wi-Fi-Netzen zu verbinden, die er gegebenenfalls in seiner Umgebung detektiert.

13. Tracer (1) zur Geolokalisierung von Gütern oder Personen, der einen Mikrocontroller (1a), ein Wi-Fi-Sender/Empfängermodul (1b), eine Versorgung (le) umfasst, wobei der Mikrocontroller (1a) geeignet ist, die Schritte a) bis c) eines Verfahrens nach einem der Ansprüche 1 bis 12 auszuführen, wobei der Lokalisierungs-Tracer (1) ein Sender/Empfängermodul (1c) der LPWAN-Technologie umfasst.

14. Tracer (1) nach Anspruch 13, **dadurch gekennzeichnet, dass** er ferner mindestens einen Sensor zur Messung externer physikalischer Größen umfasst.

15. Tracer (1) nach Anspruch 14, wobei ein Verlassen des Stand-by-Zustands durch den Tracer (1) in Abhängigkeit von den Messungen des Sensors zur Messung externer physikalischer Größen ausgelöst wird.

16. System zur Geolokalisierung von Gütern oder Dienstleistungen, das mindestens einen Tracer (1) nach einem der Ansprüche 13 bis 15 und einen Auflösungsserver (3b) umfasst, der angepasst ist, um den Schritt d) eines Verfahrens nach einem der Ansprüche 1 bis 12 auszuführen.

## Claims

1. A method for geolocating a good or a person wherein a tracker (1) associated with said good or with said person implements the following steps:
a) detecting WiFi networks and their access points (2a) which are located within its range,
b) collecting raw data relating to at least one detected WiFi network and to at least one access point (2a) through which said network is made visible to said tracker (1),
c) transmitting the collected raw data to a remote resolution server (3b), via a LPWAN network communication established from the tracker (1),
d) processing these raw data by the remote resolution server (3b), in order to provide a location information,
**characterized in that** the geolocation method begins with a step of leaving a standby mode, and ends with a step of returning to the standby mode, and **in that** the geolocation method further comprises a step of storing in a memory raw data relating to the at least one detected WiFi network, and a step of comparing a list of the detected Wi-Fi access points (2a) with a list of the Wi-Fi access points (2a) stored during the last cycle that has allowed a location, the microcontroller (1a) being put on standby until a next cycle when the two lists include access points (2a) in common.

2. The method according to claim 1, further comprising a step of reconfiguring some parameters of the tracker (1) and/or initiating a software update, after receiving a response from a server (3a).

3. The method according to claim 1 or claim 2, further comprising a step of eliminating, by the tracker (1), one of two similar networks that would be emitted by the same physical access point (2a), the tracker (1) being based on a subset of the BSSID of the surrounding Wi-Fi access points (2a).

4. The method according to any of claims 1 to 3, wherein the LPWAN network is a LoRaWan network.

5. The method according to any of claims 1 to 3, wherein the LPWAN network is a SigFox network.

6. The method according to any of claims 1 to 3, wherein the LPWAN network is a Zigbee network.

7. The method according to any of claims 1 to 3, wherein the LPWAN network is an LTE-m network.

8. The method according to any of claims 1 to 3, wherein the LPWAN network is a narrowband-IOT network.

9. The method according to any of claims 1 to 3, wherein the tracker (1) checks the possibility of a transmission to the remote resolution server (3b) via a WiFi network to which it manages to connect and wherein, failing this, the tracker (1) triggers a LPWAN network transmission.

10. The method according to any of claims 1 to 3, wherein the tracker (1) checks the possibility of a transmission to the remote resolution server (3b) via a LPWAN network communication and wherein, failing this, the tracker (1) triggers a transmission via a WiFi Network to which it manages to connect.

11. The method according to any of claims 1 to 3, wherein raw data comprise an access point identifier (2a) (BSSID) and/or a network name (SSID) and/or a power level of the received signal (RSSI).

12. The method according to any of the preceding claims, wherein the tracker (1) is provided with Wi-Fi identifiers which it stores and which allow it to connect to closed Wi-Fi networks that it would detect in its environment.

13. A tracker (1) for geolocating goods or persons including a microcontroller (1a), a WiFi transceiver module (1b), a power supply (1e), wherein the microcontroller (1a) is able to implement the steps a) to c) of a method according to any of claims 1 to 12, said location tracker (1) including a transceiver module (1c) of LPWAN technology.

14. The tracker (1) according to claim 13, **characterized in that** it further includes at least one external physical quantity measurement sensor.

15. The tracker (1) according to claim 14, wherein the tracker (1) is caused to leave the standby mode based on the measurements of the external physical quantity measurement sensor.

16. A system for geolocating goods or services including at least one tracker (1) according to any of claims 13 to 15 and a resolution server (3b) adapted to implement the step d) of a method according to any of claims 1 to 12.
